# EUROPEAN PATENT SPECIFICATION

(11) **EP 2 228 550 B1**
(45) Date of publication and mention of the grant of the patent: **05.09.2012**
(21) Application number: 09155120.0
(22) Date of filing: 13.03.2009
(51) Int. Cl.: F16B 21/16, F16B 12/20, E04B 1/48

(54) **Tenon joint**
Zapfenverbindung
Jonction de tenon

(43) Date of publication of application: 15.09.2010
(73) Proprietor: Kato, Toshiyuki, Hidaka-shi Saitama 350-1213 (JP)
(72) Inventor: Kato, Toshiyuki, Hidaka-shi Saitama 350-1213 (JP)
(74) Representative: Modiano, Micaela Nadia

(56) References cited:
- WO-A-92/18779
- WO-A-96/39584
- WO-A-03/059120
- CH-A5- 674 321
- DE-A1- 1 429 696
- DE-U1-202004 008 258
- US-A- 4 815 885

## Description

### BACKGROUND OF THE INVENTION

### Field of the Invention

This invention relates to a tenon joint used to join members placed adjacent to each other to construct a wooden structure, such as a building or furniture.

### Description of the Related Art

Japanese Patent KOKAI Publication 2003-213798 discloses a tenon pipe. This tenon pipe is used to join structural members placed adjacent to each other, for example a main post and a sub post, in construction of a wooden building. This type of tenon pipe has a plurality of pin receiving holes extending through its diameter and open at its cylindrical surface.

The main post and the sub post each have a mortise formed in their joint face, and the tenon pipe is inserted into these mortises with its ends located inside the main post and the sub post, respectively, so that the tenon pipe extends from the main post to the sub post. The main post and the sub post each have a pin insertion hole intended to be in alignment with the corresponding pin receiving hole of the tenon pipe. By driving, or inserting pins into the pin receiving holes aligned with the pin insertion holes, the main post and the sub post are joined by means of the tenon pipe and the pins.

The above-mentioned tenon pipe allows driving of pins only when the pin receiving holes in the tenon pipe are in alignment with the corresponding pin insertion holes in the main post and sub post. Thus, prior to driving the pins, positioning is required to bring the pin receiving holes in alignment with the corresponding pin insertion holes. Such positioning, or operation prior to pin driving requires a lot of care and labor, which makes the joining of the main post and the sub post a difficult operation.

Fittings or fixation devices by way of pins are known from the documents WO 03/059120 A, WO 96/39584 A, DE 20 2004 008258 U1, CH 674 321 A5 and WO 92/18779 A.

The object of the present invention is to provide a tenon joint capable of reducing care and labor required prior to pin driving, to a large extent, and facilitating the joining operation.

The above object is achieved by a tenon joint according to the present invention. This tenon joint comprises a tenon rod that is used to join two members, and comprises a rod body for being located inside at least a first one of the two members, and at least one groove component formed on an outer cylindrical surface of the rod body to extend all around the rod body, for being located inside the first member and receiving a pin driven into the first member therein.

The groove component of the tenon rod according to the present invention extends all around the rod body, which eliminates the necessity for positioning of the groove component in the circumferential direction prior to pin driving, thus greatly reducing the care and labor required prior to pin driving and allowing easy and quick joining of the two members.

Specifically, the groove component may include at least one selected from an annular groove, a helical groove and a screw.

In a desirable aspect, the rod body has a threaded male end portion for projecting from the first member, where a second member of the two is joined to the first member by being attached to the threaded male end portion.

When the groove component includes a helical groove or a screw, it is desirable that the rod body further include a turning operation portion enabling the rod body to be turned about its axis. In this case, when the rod body is turned about its axis by using the turning operation portion, the helical groove or screw cooperates with the pin to draw one member to the other along the axis of the rod body. When the groove component includes a screw, the screw enables screwing of the rod body into a mortise in one of the two members.

The present invention provides a tenon joint as set forth in claim 1. The tenon joint comprises a tenon rod of the above-described type including a groove component forming a first end portion of the tenon rod and an inverted cone end forming the opposite, second end portion thereof, for being located inside a second one of two members to be joined, the inverted cone end tapering toward the first end portion; and a hollow pin for receiving the inverted cone end of the tenon rod when driven into the second member, wherein the pin has an axially-extending slit for guiding guide a neck of the inverted cone end, the slit gradually reducing in width from one end to the other end of the pin.

This tenon joint allows the neck of the inverted cone end to widen the slit of the pin as the pin is driven in. This results in an increase in outside diameter of the pin, thus, firm contact between the pin and the second member.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus, are not limitative of the present invention, and wherein:
FIG. 1 is a side view showing a tenon rod of a tenon joint according to a first embodiment of the present invention,
FIG. 2 shows how to use the tenon rod of FIG. 1, where FIG. 2A is a transparent side view and FIG. 2B a transparent perspective view showing a post and a beam joined by means of the tenon rod,
FIGS. 3 and 4 show variants of the tenon rod according to the first embodiment,
FIG. 5 shows how to use the tenon rod of FIG. 4, where FIG. 5A is a transparent plan view, FIG. 5B a transparent side view and FIG. 5C a transparent perspective view showing a post equipped with the tenon rod,
FIGS. 6 and 7 show variants of the tenon rod according to the first embodiment,
FIG. 8 shows how to use the tenon rod of FIG. 7, where FIG. 8A is a transparent side view and FIG. 8B a transparent perspective view showing a post equipped with the tenon rod,
FIGS. 9 and 10 show variants of the tenon rod according to the first embodiment,
FIG. 11 shows how to use the tenon rod of FIG. 10, where FIG. 11A is a transparent side view and FIG. 11B a transparent perspective view showing a post and a beam joined by means of the tenon rod,
FIG. 12 is a side view showing a tenon rod of a tenon joint according to a second embodiment,
FIG. 13 shows how to use the tenon rod of FIG. 12, where FIG. 13A is a transparent plan view, FIG. 13B a transparent side view and FIG. 13C a transparent perspective view showing a beam equipped with the tenon rod,
FIG. 14 shows a variant of the tenon rod according to the second embodiment,
FIG. 15 shows how to use the tenon rod of FIG. 14, where FIG. 15A is a transparent plan view, FIG. 15B a transparent side view and FIG. 15C a transparent perspective view showing a beam equipped with the tenon rod,
FIG. 16 shows a variant of the tenon rod according to the second embodiment,
FIG. 17 shows how to use the tenon rod of FIG. 16, where FIG. 17A is a transparent plan view, FIG. 17B a transparent side view and FIG. 17C a transparent perspective view showing a post equipped with the tenon rod,
FIG. 18 shows a drift pin shown in FIG. 17, where FIG. 18A is a side view and FIG. 18B an end view of the drift pin,
FIG. 19 shows a variant of the tenon rod according to the second embodiment,
FIG. 20 shows how to use the tenon rod of FIG. 19, where FIG. 20A is a transparent plan view, FIG. 20B a transparent side view and FIG. 20C a transparent perspective view showing a beam equipped with the tenon rod,
FIG. 21 shows a variant of the tenon rod according to the second embodiment,
FIG. 22 shows how to use the tenon rod of FIG. 21, where FIG. 22A is a transparent plan view, FIG. 22B a transparent side view and FIG. 22C a transparent perspective view showing a post and a beam joined by means of the tenon rod,
FIG. 23 shows a variant of the tenon rod according to the second embodiment, where FIG. 23A is a side view of a rod half for forming the tenon rod, FIG. 23B a bottom view of the other rod half for forming the tenon rod, and FIG. 23C an end view of the rod half,
FIG. 24 shows how to use the tenon rod of FIG. 23, where FIG. 24A is a transparent plan view, FIG. 24B a transparent side view and FIG. 24C a transparent perspective view showing a post and beams equipped with the tenon rod;
FIG. 25 shows a tenon rod of a tenon joint according to a third embodiment,
FIG. 26 shows how to use the tenon rod of FIG. 25, where FIG. 26A is a transparent plan view, FIG. 26B a transparent side view and FIG. 26C a transparent perspective view showing a post and a beam joined by means of the tenon rod;
FIG. 27 shows a variant of the tenon rod according to the third embodiment,
FIG. 28 shows a tenon rod for a tenon joint according to an embodiment of the present invention,
FIG. 29 shows a drift pin for the tenon joint, where FIG. 29A is a bottom view, FIG. 29B a side view and FIG. 29C an end view of the drift pin, and
FIG. 30 shows how to use the tenon joint, where FIG. 30A is a transparent plan view, FIG. 30B a transparent side view and FIG. 30C a transparent perspective view showing a post and a beam joined by the tenon joint, and FIG. 30D shows part of FIG. 30B on an enlarged scale.

### DETAILED DESCRIPTION OF THE PREFERRED EMBODIMENTS

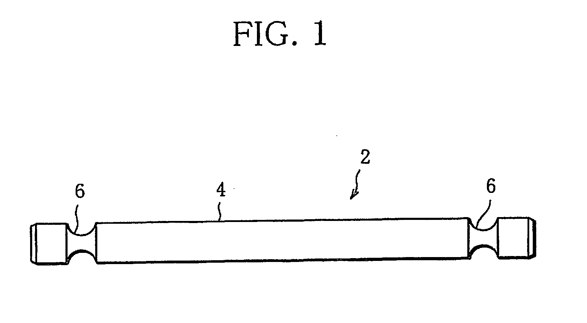

FIG. 1 shows a tenon rod 2 of a tenon joint according to a first embodiment.

The tenon rod 2 includes a rod body 4 made of a metal round bar. The rod body 4 has an annular, or circumferential groove 6 in each end portion. The annular groove 6 is a circular arc in cross section, and extends all around the rod body 4. The annular groove 6 is intended to engage with the aforementioned pin, so-called drift pin.

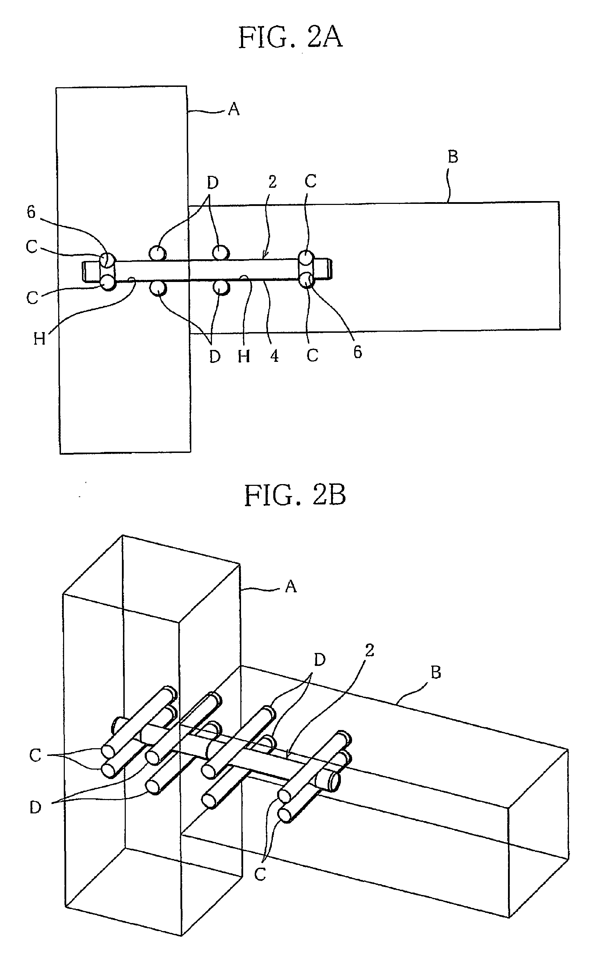

FIGS. 2A and 2B show how to use the above-described tenon rod 2.

In FIG. 2, the tenon rod 2 and drift pins are used to join a post A and a beam B. The post A and the beam B are made of wood and each have a horizontally-extending mortise H to receive the tenon rod 2. The mortises H are arranged such that the post A and the beam B is in contact with each other, with their mortises' open ends met together.

Further, the post A and the beam B each have a plurality of pin insertion holes at specified locations. The pin insertion holes extend horizontally, across the mortise H, in pairs of an upper and a lower pin insertion holes sandwiching the mortise H between.

As seen from FIGS. 2A and 2B, with the tenon rod 2 inserted in the mortises H of the post A and the beam B, the joint faces of the post A and the beam B are in close contact with each other. In this state, drift pins are driven into the pin insertion holes of the post A and the beam B in a manner engaging with the annular groove 6 of the tenon rod 2. The drift pins are metal round bars.

Specifically, the drift pins include two pairs of drift pins C fitted in the annular groove 6 on the upper and lower sides of the tenon rod 2 to hold the tenon rod 2 between them, and two pairs of drift pins D set on the upper and lower sides of the rod body 4 of the tenon rod 2 to hold the rod body 4 between them.

The tenon rod 2 and the drift pins C cooperate to join the post A and the beam B, where the drift pins D help the tenon rod 2 support the beam B.

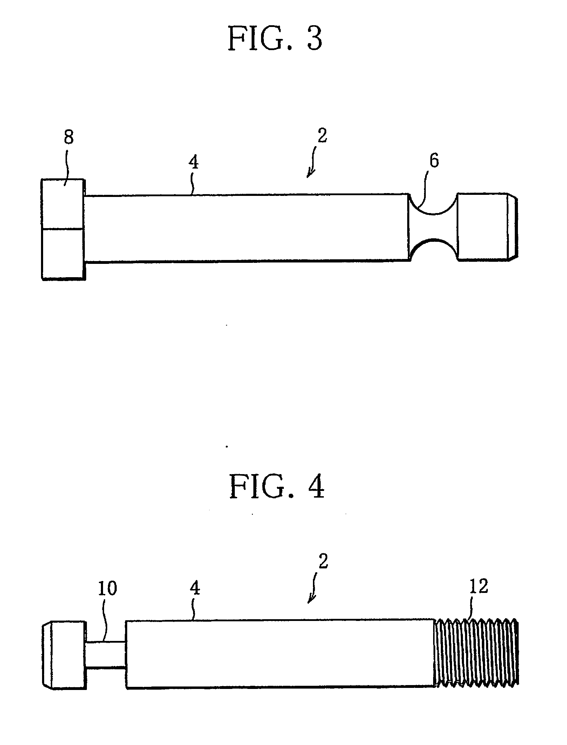

FIGS. 3 to 11 show variants of the tenon rod 2 according to the first embodiment and how to use them.

The tenon rod 2 shown in FIG. 3 has an annular groove 6 only in one end portion thereof. A hexagonal head 8 is integrally formed at the other end of the tenon rod 2. The hexagonal head 8 has an outside diameter greater than the diameter of the rod body 4 and is hexagonal in shape.

The tenon rod 2 shown in FIG. 4 also has an annular groove 10 only in one end portion thereof. The annular groove 10 is rectangular in cross section. The other end portion of the tenon rod 2 of FIG. 4 is formed as a threaded male portion 12.

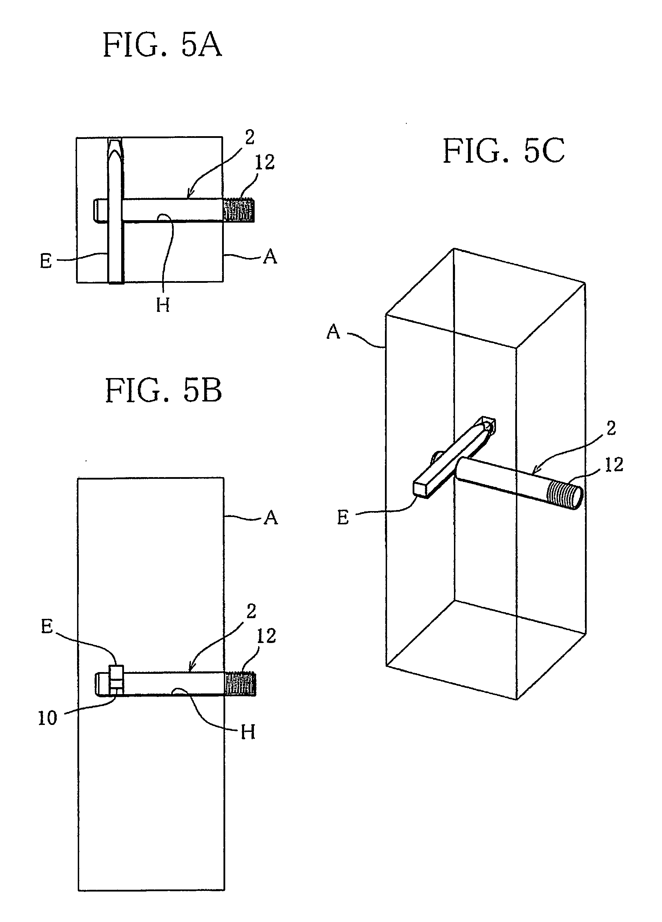

FIGS. 5A, 5B and 5C show how to use the tenon rod 2 of FIG. 4.

The tenon rod 2 is inserted in a mortise H of a post A, with the threaded male portion 12 projecting outside the post A. In this state, a drift pin E is driven into the post A, in a manner engaging with the annular groove 10 of the tenon rod 2. The drift pin E fits in the annular groove 10, thereby preventing the tenon rod 2 from coming off the post A. The drift pin E is rectangular in cross section corresponding to the annular groove 10 rectangular in cross section, and has a tapered end. The threaded male portion 12 of the tenon rod 2 is intended for attachment or support of another member to be joined to the post A.

The tenon rod 2 of FIG. 3 can be used in the manner similar to that shown in FIG. 5, where the hexagonal head 8 of the tenon rod 2 is intended to hold a member to be joined to the post A, between itself and the post A.

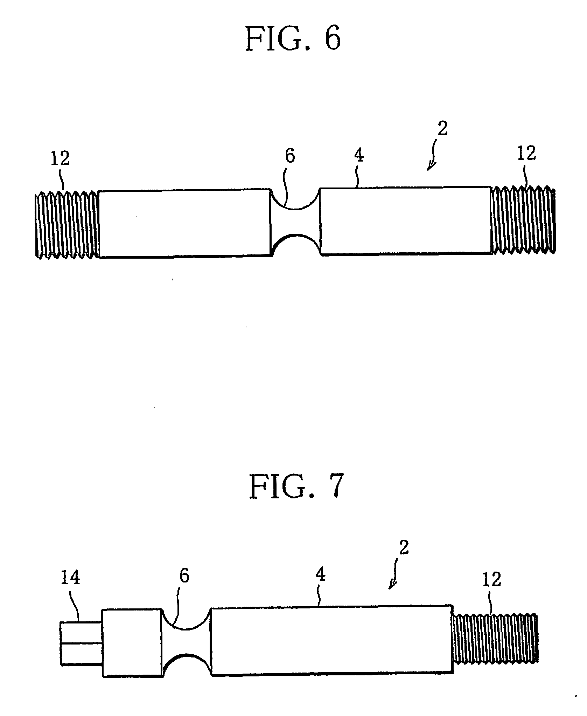

The tenon rod 2 in FIG. 6 has an annular groove 6 in the axial center of the rod body 4, and threaded male portions 12 forming the opposite end portions of the rod body 4. The tenon rod 2 of FIG. 6 is inserted in a mortise of a post A, with the opposite end portions, i.e., threaded male portions 12 of the tenon rod 2 projecting from the opposite side faces of the post A.

The tenon rod 2 in FIG. 7 has an annular groove 6 in a first end portion of the rod body 4, and a threaded male portion 12 forming the opposite, second end portion of the rod body 4. The tenon rod 2 of FIG. 7 further includes a hexagonal tail 14 projecting from the first end face of the rod body 4. The hexagonal tail 14 is intended for use in turning the rod body 4 about its axis, and has an outside diameter smaller than the diameter of the rod body 4.

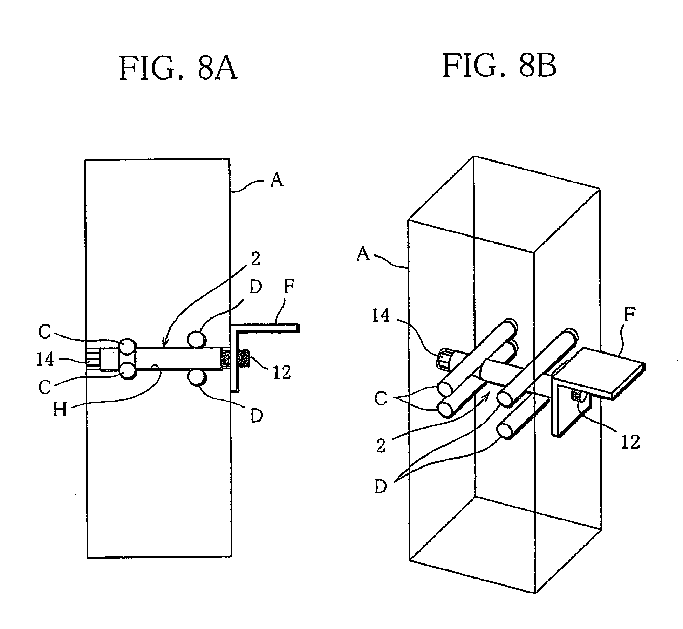

FIGS. 8A and 8B show how to use the tenon rod 2 of FIG. 7.

As seen from FIG. 8, the tenon rod 2 of FIG. 7 is inserted in a mortise H of a post A, with the threaded male portion 12 projecting outside the post A and the hexagonal tail 14 placed inside the mortise H of the post A. In this state, a pair of drift pins C and a pair of drift pins D are driven into the post A, where the drift pins C, D have functions similar to those described above (see FIG. 2).

The threaded male portion 12 is screwed into a threaded hole of an attachment bracket F, so that the attachment bracket F is mounted on the threaded male portion 12 and brought in close contact with the post A. The attachment bracket F is depicted as an angled member.

The threaded male portion 12 can be screwed into the threaded hole of the attachment bracket F by turning the tenon rod 2 by means of using its hexagonal tail 14. Not projecting from the post 4, the hexagonal tail 14 does not interfere with attachment of another member to the post A.

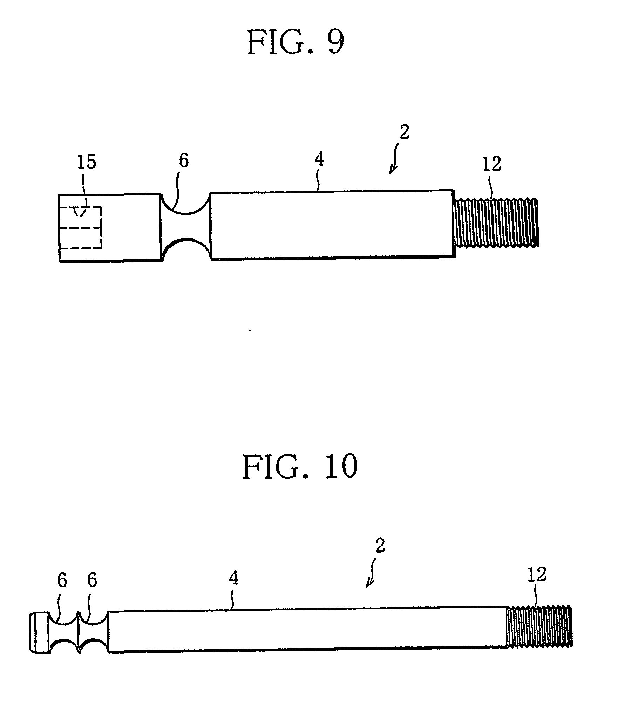

The tenon rod 2 in FIG. 9 has a hexagonal hole 15 in an end portion of the rod body 4, in place of the hexagonal tail 14 of FIG. 7. In the other respects, it is similar to the tenon rod of FIG. 7.

The tenon rod 2 in FIG. 10 has two adjacent annular grooves 6 in a first end portion of the rod body 4. The opposite, second end portion of the rod body 4 is formed as a threaded male portion 12.

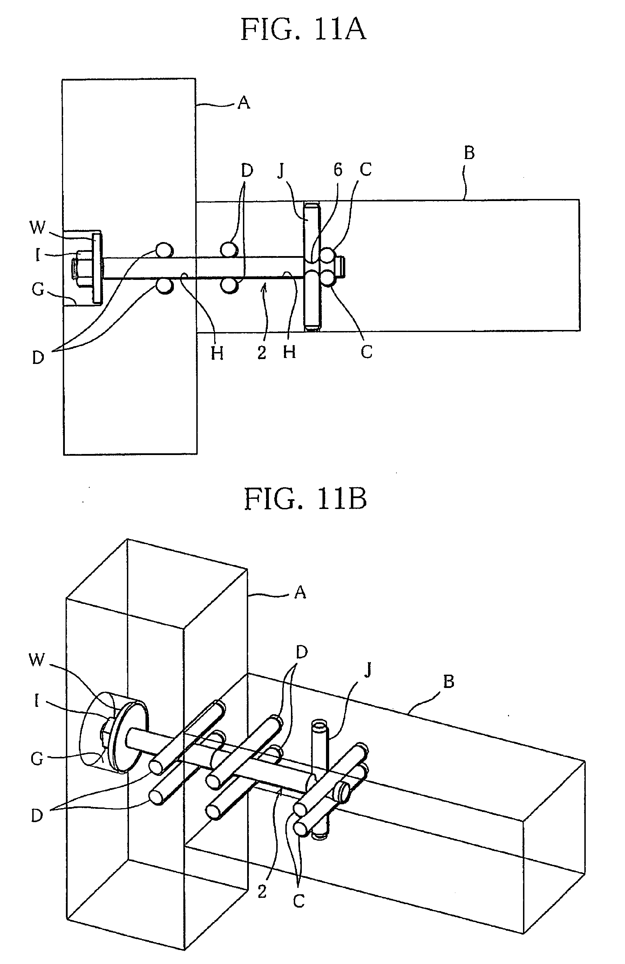

FIGS. 11A and 11B show how to use the tenon rod 2 of FIG. 10.

As seen from FIG. 11, a post A has a counterbore G adjoining an open end of a mortise H. The counterbore G has an inside diameter greater than the inside diameter of the mortise H. The tenon rod 2 of FIG. 10 is inserted in the mortises H of the post A and a beam B, with the threaded male portion 12 placed inside the counterbore G. In this state, a nut I is screwed onto the threaded male portion 12 with a washer W, a pair of drift pins C are engaged with the annular groove 6 nearer to the first end of the rod body 4, and a drift pin J is engaged with the other annular groove 6.

The washer W and nut I, and the drift pins C in a pair cooperate to inhibit axial displacement of the tenon rod 2, so that the post A and the beam B are joined by the tenon rod 2. Further, the drift pin J at right angles to the drift pins C strengthens the connection between the post A and the beam B.

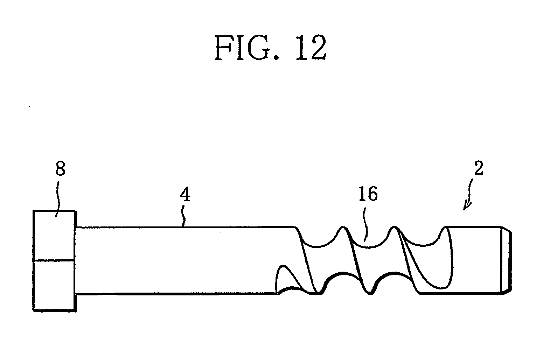

FIG. 12 shows a tenon rod 2 of a tenon joint according to a second embodiment.

In comparison with the tenon rod 2 in FIG. 3, the tenon rod 2 in FIG. 12 differs only in that it has a helical groove 16 in place of the annular groove 6. The helical groove 16 is a circular arc in cross section.

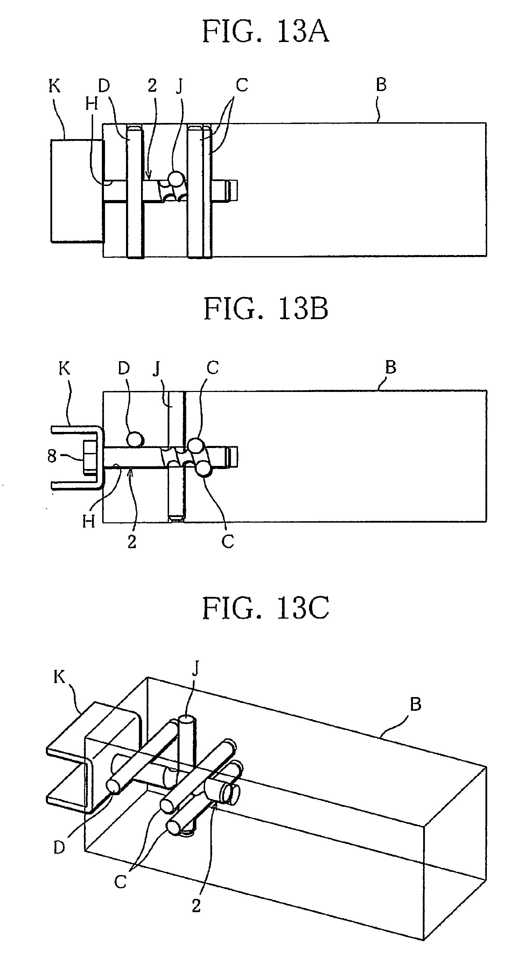

FIGS. 13A, 13B and 13C show how to use the tenon rod 2 of FIG. 12.

As seen from FIG. 13, the tenon rod 2 of FIG. 12 is inserted in a mortise H of a beam B, with the hexagonal head 8 projecting from the end face of the beam B. In this state, a pair of drift pins C are fitted in the spiral groove 16 on the upper and lower sides of the tenon rod 2 to hold the tenon rod 2 between them. Due to the helical configuration of the helical groove 16, the drift pins C are at different axial locations with respect to the tenon rod 2. FIG. 13 also shows a drift pin D and a drift pin J. The drift pin D is set in contact with the cylindrical surface of the rod body 4 as mentioned above, while the drift pin J is fitted in the helical groove 16, like the drift pins C. The drift pin J extends at right angles to the drift pins C and the tenon rod 2, thus vertically.

Further, an attachment bracket K is held between the hexagonal head 8 of the tenon rod 2 and the end face of the beam B. The attachment bracket K is approximately a U-shape in cross section. The attachment bracket K is in close contact with the beam B and usable in attaching another member to the beam B.

When the tenon rod 2 set as shown in FIG. 13 is turned in the forward direction with respect to the helical groove 16, the helical groove 16 forces the drift pins C, J against the inner surfaces of their corresponding pin insertion holes. Consequently, the drift pins C, J are pressed on the helical groove 16, which provides firm connection between the attachment bracket K and the beam B.

When turned in the reverse direction, the tenon rod 2 forces the drift pins C, J against the inner surfaces of their corresponding pin insertion holes in the opposite direction, thereby drawing the beam B to the attachment bracket K.

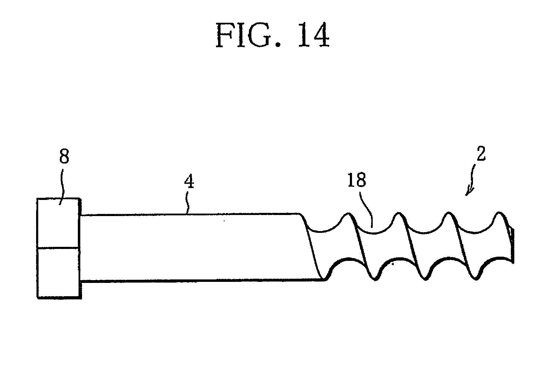

FIGS. 14 to 27 show variants of the tenon rod 2 of a tenon joint according to the second embodiment and how to use them.

In comparison with the tenon rod 2 in FIG. 12, the tenon rod 2 in FIG. 14 differs only in that it has a screw 18 in place of the helical groove 16. The screw 18 extends from an end of the rod body 4 toward the hexagonal head 8 over a specified length.

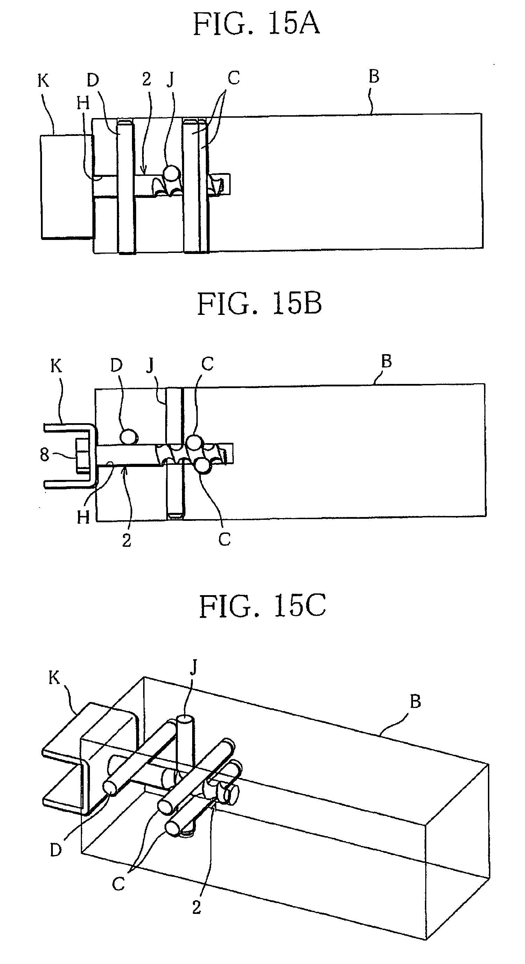

FIGS. 15A, 15B and 15C show how to use the tenon rod 2 of FIG. 14.

The way to use the tenon rod 2 shown in FIG. 15 is similar to that shown in FIG. 13. The tenon rod 2 of FIG. 14, however, allows insertion in the mortise H of the beam B after the drift pins C, D, J are driven into the beam B.

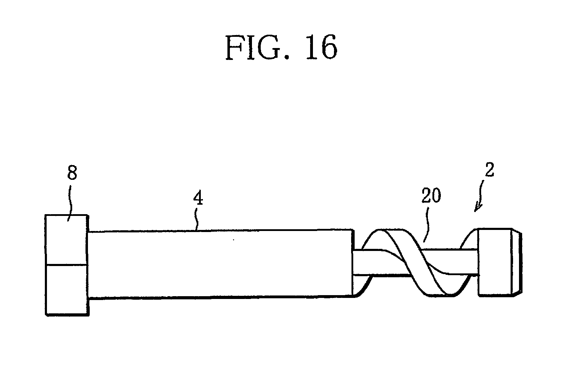

In comparison with the tenon rod 2 in FIG. 12, the tenon rod 2 in FIG. 16 differs only in that it has a helical groove 20 in place of the helical groove 16. The helical groove 20 is rectangular in cross section.

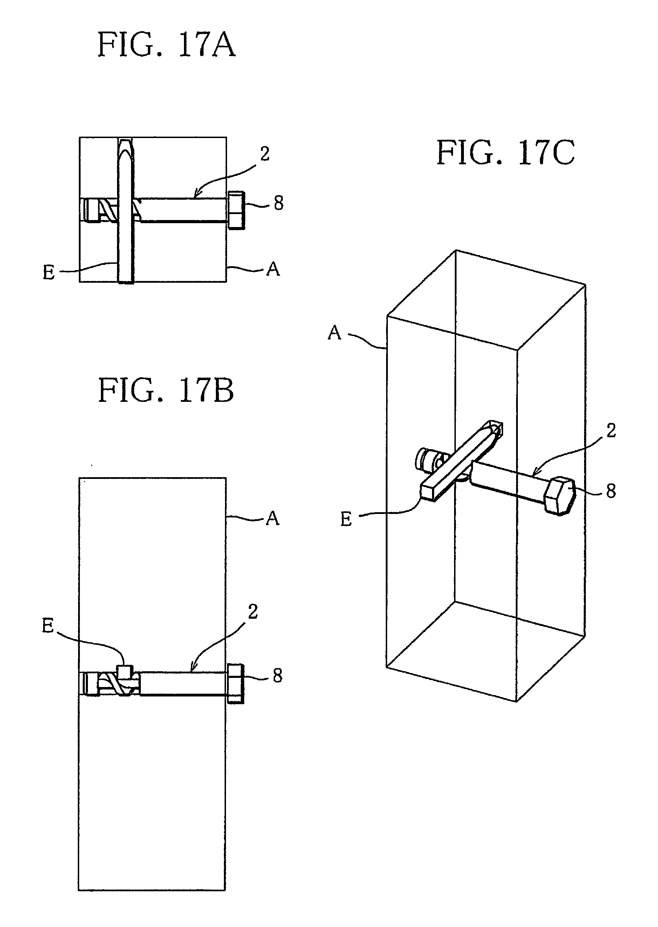

FIGS. 17A, 17B and 17C show how to use the tenon rod 2 of FIG. 16.

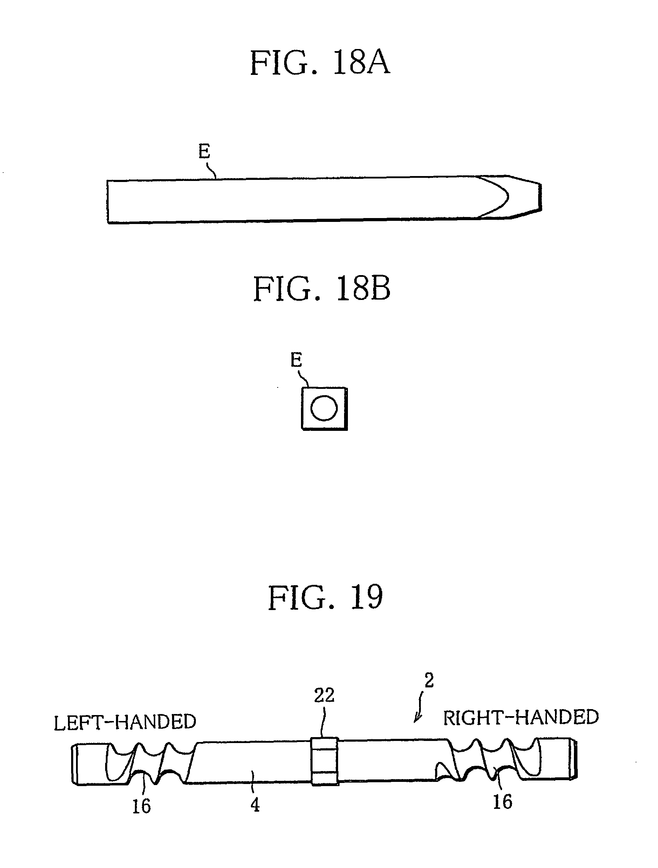

As seen from FIG. 17, a drift pin E of the type already mentioned above is fitted in the helical groove 20 of the tenon rod 2. FIGS. 18A and 18B show the drift pin E on an enlarged scale.

The tenon rod 2 in FIG. 19 has a helical groove 16 in each end portion thereof. The two helical grooves 16 are opposite in the direction of helix. Specifically, in FIG. 19, the left-side helical groove 16 forms a left-handed helix while the right-side helical groove 16 forms a right-handed helix.

The tenon rod 2 of FIG. 19 further has a hexagonal flange 22 at the center of the rod body 4. The hexagonal flange 22 is formed integrally with the rod body 4 and has an outside diameter greater than the diameter of the rod body 4.

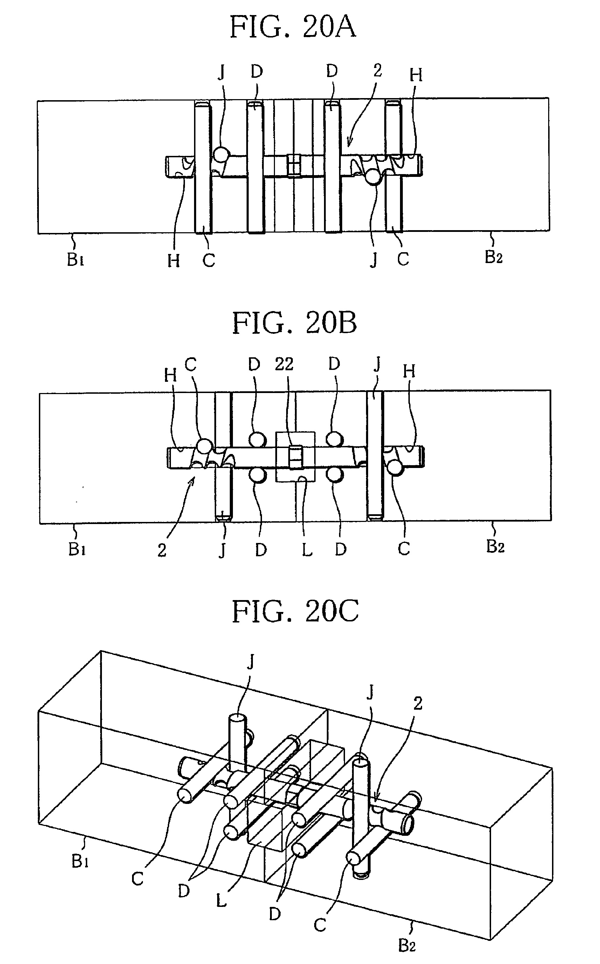

FIGS. 20A, 20B and 20C show how to use the tenon rod 2 of FIG. 19.

As seen from FIG. 20, the tenon rod 2 of FIG. 19 is used to join two beams B1, B2. Specifically, the beams B1, B2 each have a groove in their joint face. With the joint faces of the beams B1, B2 in close contact with each other, the grooves are in alignment with each other, thus providing an access hole L. The access hole L is rectangular in cross section and open at each side of the aligned beams, B1, B2.

With the tenon rod 2 inserted in mortises H of the beams B1, B2, the hexagonal flange 22 of the tenon rod 2 is located within the access hole L. After this, drift pins C, D, J are driven into the beams B1, B2 to be held in the beams B1, B2.

In this state, a tool is inserted in the access hole L.
The tenon rod 2 can be turned by handling the tool to the hexagonal flange 22. When the tenon rod 2 is turned in the forward direction with respect of the helical groove 16, the helical grooves 16 of the tenon rod 2 and the drift pins C, J cooperate to draw the beams B1, B2 to each other, thereby achieving firm connection between the beams B1, B2 without leaving a space between their joint faces.

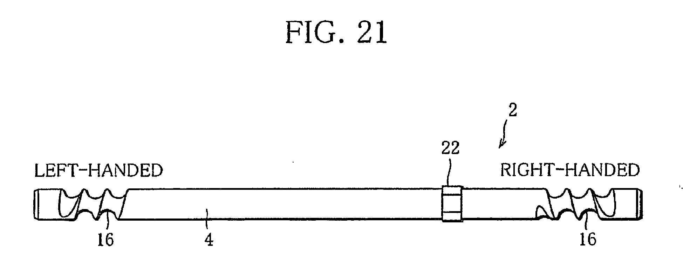

In comparison with the tenon rod 2 in FIG. 19, the tenon rod 2 in FIG. 21 differs only in that the rod body 4 is longer than that in FIG. 19, and that the hexagonal flange 22 is nearer to the right-handed helical groove 16 of the rod body 4.

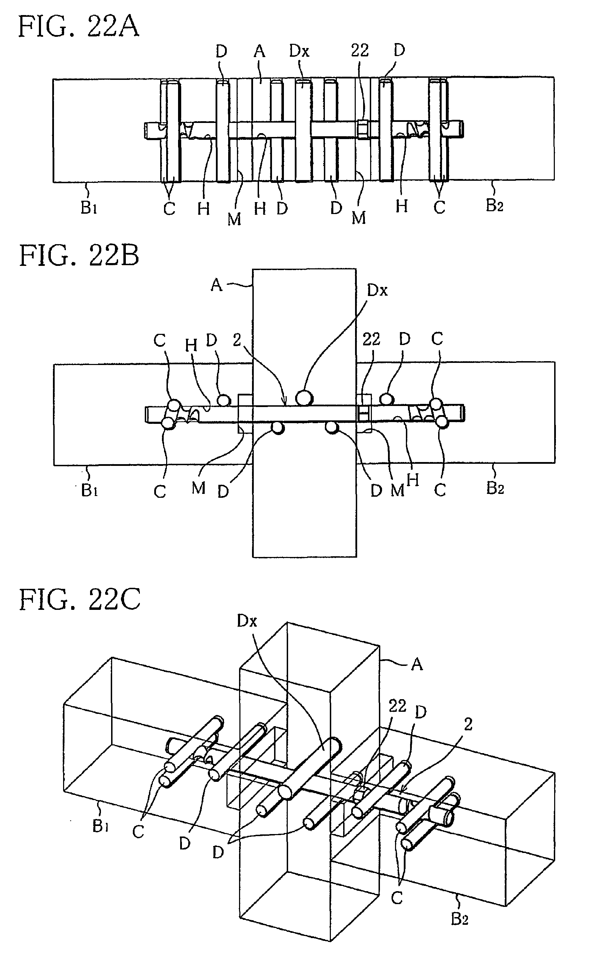

FIGS. 22A, 22B and 22C show how to use the tenon rod 2 of FIG. 21.

The tenon rod 2 is used to join beams B1, B2 arranged on the opposite sides of a post A, together with the post A. For this end, the joint faces of the beams B1, B2, to be joined to the post A, have a groove M, which is open at each side of the beam B.

With the tenon rod 2 inserted in mortises H in the post A and beams B1, B2, the hexagonal flange 22 is located within the groove M of the beam B2. After this, drift pins C, D are driven into the beams B1, B2 and the post A to support the tenon rod 2. The mortise H of the post A is a through-hole extending through the post A.

Like the aforementioned access hole L, the groove M of the beam B2 allows access to the hexagonal flange 22, thereby allowing the tenon rod 2 to be turned. When the tenon rod 2 is turned, the helical grooves 16 of the tenon rod 2 and the drift pins C cooperate to draw the beams B1, B2 to the post A, thereby achieving firm connection between the respective beams B1, B2 and the post A without leaving a space between the joint faces of each beam B and the post A.

One of the drift pins D, specifically the drift pin Dx can be replaced with the tenon rod 2 shown in FIG. 21. In this case, the tenon rod 2 of FIG. 21 is usable in joining another two beams (not shown), arranged at right angles to the beams B1, B2, to the post A.

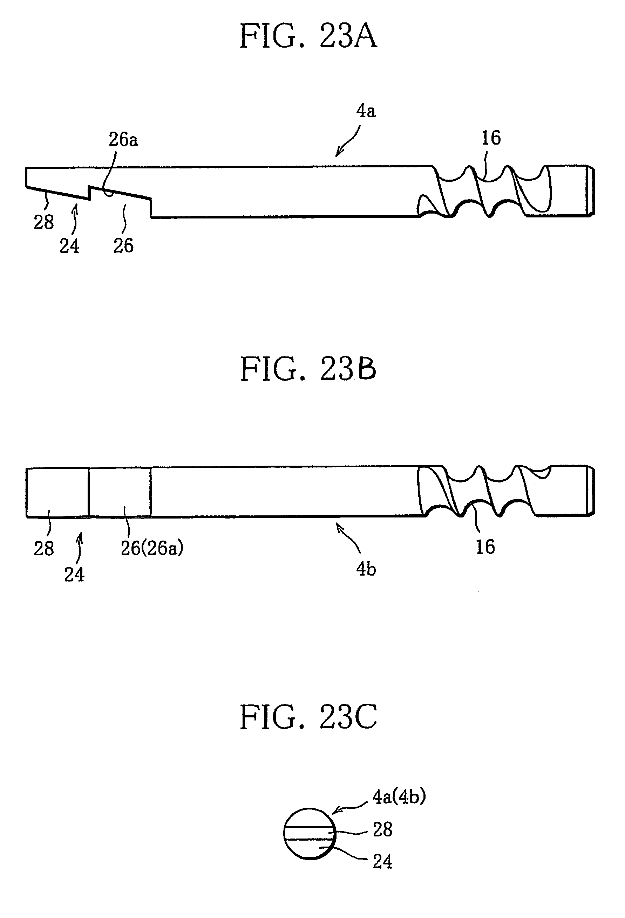

FIGS. 23A, 23B and 23C show rod halves 4a, 4b for forming a split tenon rod 2. The rod halves 4a, 4b each have a helical groove 16 in a first end portion, and the opposite, second end portion is formed as a coupling portion 24. The coupling portion 24 is adapted to engage with another coupling portion 24, to allow the rod halves 4a, 4b to be separably connected together to form a rod body 4. Specifically, the coupling portions 24 allow the rod halves 4a, 4b to be integrated along the axis direction of the to-be-formed rod body 4.

More specifically, the coupling portion 24 has a groove 26 formed in the second end portion of the rod half, a specified distance away from the second end of the rod half. The coupling portion 24 also includes a sloping surface 28. The sloping surface 28 extends from the second end of the rod half to the groove 26, inclined relative to the axis of the rod half. The sloping surface 28 forms the second end portion of the rod half as a tapering portion, and the bottom 26a of the groove 26 is parallel to the sloping surface 28.

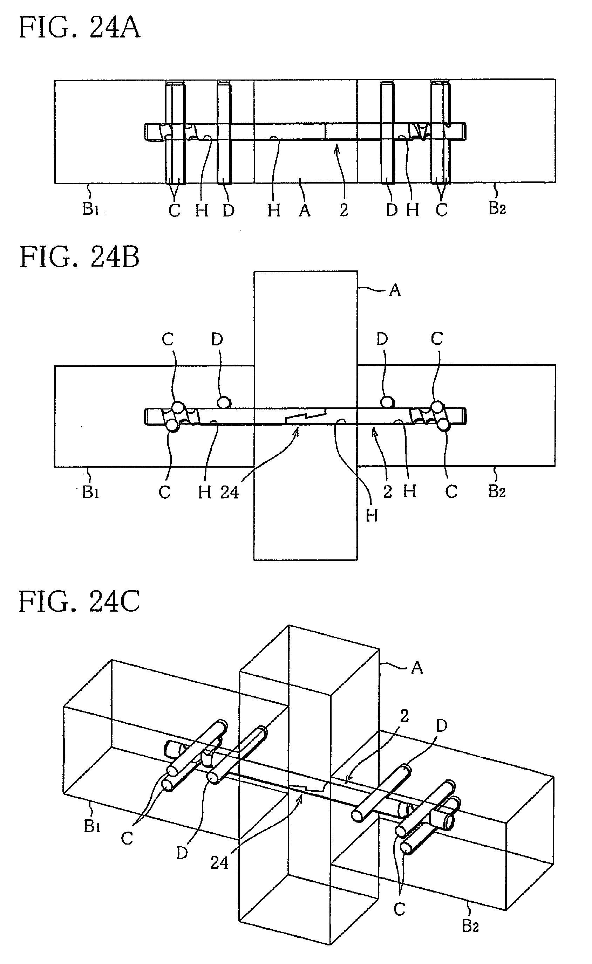

The coupling portions 24 allow the rod halves 4a, 4b to engage with each other, where the bottom 26a of the groove 26 and the sloping surface 28 of the rod half 4a meet the sloping surface 28 and the bottom 26a of the groove 26 of the rod half 4b, respectively. In this manner, the rod halves 4a, 4b form a single tenon rod 2 (see FIG. 24).

FIGS. 24A, 24B and 24C show how to use the tenon rod 2 of FIG. 23.

Like the tenon rod 2 shown in FIG. 21, the tenon rod 2 is used to join two beams B1, B2 to a post A.

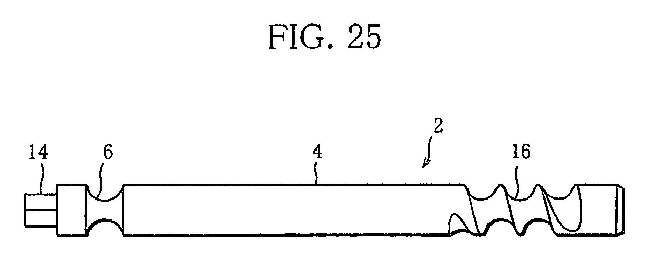

FIG. 25 shows a tenon rod 2 of a tenon joint according to a third embodiment.

The tenon rod 2 of FIG. 25 has a helical groove 16 in a first end portion of the rod body 4, an annular groove 6 in the opposite, second end portion thereof, and a hexagonal tail 14 at the second end of the rod body 4.

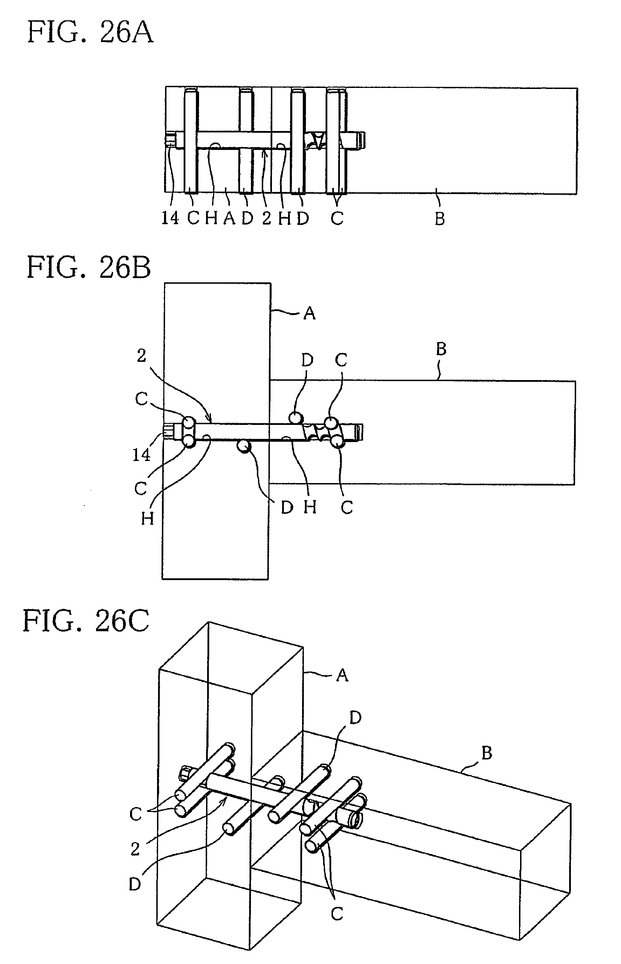

FIGS. 26A, 26B and 26C show how to use the tenon rod 2 of FIG. 25.

As seen from FIG. 26, the tenon rod 2 of FIG. 25 is used to join a beam B to a post A.

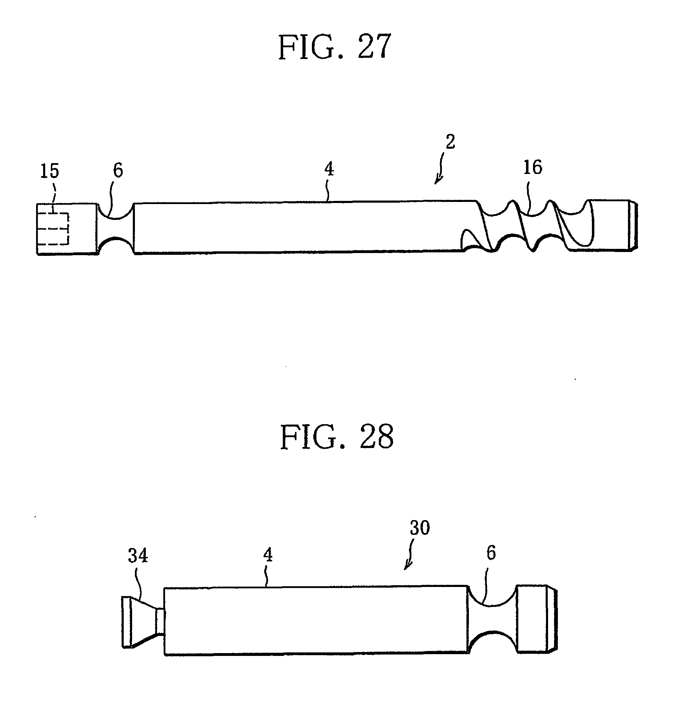

FIG. 27 shows a variant of the tenon rod of a tenon joint according to the third embodiment.

The tenon rod 2 of FIG. 27 differs from the tenon rod of FIG. 25 only in that it has a hexagonal hole 15 in place of the hexagonal tail 14.

FIGS. 28 to 30 show a tenon joint according to an embodiment.

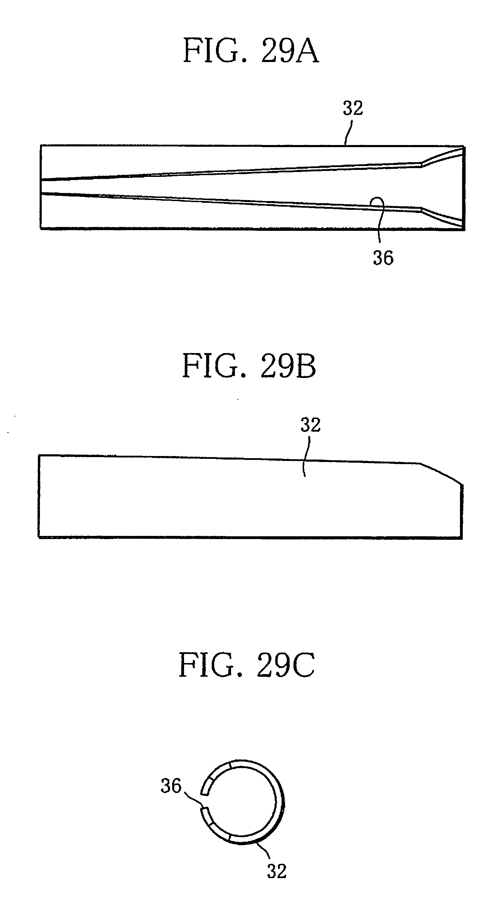

The tenon joint comprises a tenon rod 30 shown in FIG. 28 and a drift pin 32 shown in FIGS. 29A, 29B and 29C.

The tenon rod 30 has an annular groove 6 in a first end portion of a rod body 4, and the opposite, second end portion of the rod body is formed into an inverted cone end 34. The inverted cone end 34 tapers toward the first end portion of the rod body 4.

The drift pin 32 is made of a pipe member, and has an inside diameter allowing the inverted cone end 34 to be received therein. The drift pin 32 has a slit 36 extending from a first end to the opposite, second end, along the axis direction of the drift pin 32. The slit 36 is gradually reduced in width from the first end to the second end of the drift pin 32.

Further, the slit 36 is widened at the first end of the drift pin 32 by cutting away triangular portions from the edge defining the open end. This allows easy insertion of the inverted cone end 34 into the drift pin 32, from the first end thereof.

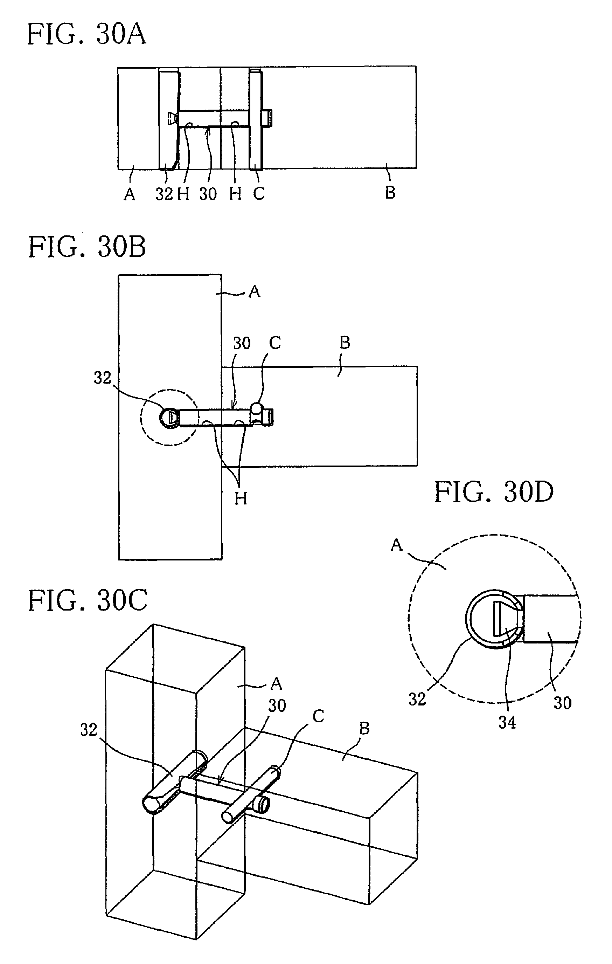

FIG. 30 shows how to use this tenon joint.

The tenon rod 30 is used to join a post A and a beam B. The tenon rod 30 is inserted in mortises H in the post A and the beam B, and a drift pin C is driven into the beam B. The drift pin C fits in the annular groove 16 of the tenon rod 30. The drift pin 32 is, on the other hand, driven into the post A, where the inverted cone end 34 of the tenon rod 30 is received inside the drift pin 32.

Specifically, driving the drift pin 32 into the post A with its first end in the forefront causes the inverted cone end 34 to be received inside the drift pin 32 with its neck in the slit 36. Driving the drift pin 32 further into the post A results in relative movement of the neck of the inverted cone end 34 within the slit 36, where the slit 36 is widened by the neck of the inverted cone end. Consequently, the drift pin 32 is increased in outside diameter and firmly engages with the inverted cone end 34, with the outer surface of the drift pin 32 strongly forced against the inner surface of the pin insertion hole. Thus, the tenon rod 30 and the drift pin 32 create firm contact between the drift pin 32 and the post A.

The present invention is not restricted to the above-described embodiments and variants.

For example, the tenon joint according to the present invention is not only applicable in joining a post or a bracket, but applicable in joining a wide variety of structural components used to construct wooden structures such as buildings, furniture, amusement facilities, etc. The structural components do not need to be made of wood. In other words, the tenon joint according to the present invention is applicable in joining structural components in a variety of materials including rubber, plastic, foamed cement, etc.

## Claims

1. A tenon joint, comprising:
at least a first member (B) being made of wood;
-a tenon rod (2) for joining said first wood member (B) to a second member (A, K), said tenon rod (2) including a rod body (4) for being located inside at least the first member (B) of the two members and at least one receiving portion formed on an outer cylindrical surface of the said rod body (4); and
- at least one drift pin (C) for being driven into the first member (B) to engage with the receiving portion of said rod body (4), said receiving portion being a groove component ( 16,18, 20) formed on the outer cylindrical surface of said rod body (4) to extend all around said rod body (4), **characterized in that** said groove component is a helical groove (16), and said rod body (4) further includes a turning operation portion (8, 14, 15,22) enabling said rod body (4) to be turned about an axis thereof,
and wherein said drift pin (C ) driven into the first member (B) is fitted in said groove component (16, 18, 20).

2. The tenon joint according to claim 1, **characterized in that** said rod body (4) has a threaded male end portion (12) for projecting from the first member.

3. The tenon joint according to claim 1, **characterized in that** the helical groove is provided by a screw (18) forming an end portion of said rod body, for being located inside the first member.

4. The tenon joint according to claim 1, **characterized in that** the helical groove (16) is provided in each end portion of said rod body (4), the two helical grooves being opposite with respect to a direction of helix.

5. The tenon joint according to claim 1, **characterized in that** said groove component includes said helical groove (16) formed on an end portion of said rod body (4), and an annular groove (6) formed on the other end portion of said rod body (4), and said rod body (4) further includes a turning operation portion enabling said rod body (4) to be turned about an axis thereof.

6. The tenon joint according to claim 1, **characterized in that** said rod body (4) includes a pair of rod halves (4a, 4b) adapted to be integrated into said rod body (4) with respect to an axis of said rod body (4) by being arranged along the axis of said rod body (4), and said groove component includes said helical groove (16) formed on each end portion of said rod body.

7. The tenon joint according to claim 1, **characterized in that** said groove component is provided on a first end portion of said rod body (4), and said rod body (4) further includes an inverted cone end (34) forming the opposite, second end for being located inside a second one of the two members, the inverted cone end (34) tapering toward the first end portion of said rod body.

8. The tenon joint according to claim 3, **characterized in that** the turning operation portion (8, 14) projects from an end face of the first member (B), and the second member (K) of the two members is held between the turning operation portion (8) and the end face of the first member (B).

## Patentansprüche

1. Eine Zapfenverbindung, die Folgendes umfasst:
- mindestens ein erstes Glied (B), das aus Holz besteht,
- einen Zapfenstift (2) für die Verbindung des ersten Holzglieds (B) mit einem zweiten Glied (A, K), wobei der Zapfenstift (2) einen Stiftkörper (4) einschließt, zur Anordnung innerhalb zumindest des ersten Glieds (B) der beiden Glieder, und mindestens einen Aufnahmeabschnitt, der an einer äußeren zylindrischen Oberfläche des Stiftkörpers (4) geformt ist, und
- mindestens einen Durchtreiber-Stift (C), um in das erste Glied (B) getrieben zu werden, um in den Aufnahmeabschnitt des Stiftkörpers (4) aufgenommen zu werden, wobei der Aufnahmeabschnitt eine Nutkomponente (16, 18, 20) ist, die an der äußeren zylindrischen Oberfläche des Stiftkörpers (4) geformt ist, um sich um den gesamten Stiftkörper (4) herum zu erstrecken,
**dadurch gekennzeichnet, dass** die Nutkomponente eine Spiralnut (16) ist und der Stiftkörper (4) weiter einen Drehvorgangs-Abschnitt (8, 14, 15, 22) einschließt, der es dem Stiftkörpers (4) ermöglicht, um eine Achse davon gedreht zu werden,
und wobei der Durchtreiber-Stift (C), der in das erste Glied (B) getrieben wird, in die Nutkomponente (16, 18, 20) eingepasst wird.

2. Die Zapfenverbindung gemäß Anspruch 1, **dadurch gekennzeichnet, dass** der Stiftkörper (4) einen mit einem Gewinde versehenen vorstehenden Endabschnitt (12) zum Herausragen aus dem ersten Glied hat.

3. Die Zapfenverbindung gemäß Anspruch 1, **dadurch gekennzeichnet, dass** die Spiralnut von einer Schraube (18) bereitgestellt wird, die einen Endabschnitt des Stiftkörpers bildet, zur Positionierung innerhalb des ersten Glieds.

4. Die Zapfenverbindung gemäß Anspruch 1, **dadurch gekennzeichnet, dass** die Spiralnut (16) in jedem Endabschnitt des Stiftkörpers (4) bereitgestellt ist, wobei die zwei Spiralnuten gegenüberliegend mit Bezug auf eine Richtung der Spirale sind.

5. Die Zapfenverbindung gemäß Anspruch 1, **dadurch gekennzeichnet, dass** die Nutkomponente die Spiralnut (16) einschließt, die an einem Endabschnitt des Stiftkörpers (4) geformt ist, und eine Ringnut (6) einschließt, die am anderen Endabschnitt des Stiftkörpers (4) geformt ist, und dass der Stiftkörper (4) weiter einen Drehvorgangs-Abschnitt einschließt, der es dem Stiftkörper (4) ermöglicht, um eine Achse davon gedreht zu werden.

6. Die Zapfenverbindung gemäß Anspruch 1, **dadurch gekennzeichnet, dass** der Stiftkörper (4) ein Paar von Stifthälften (4a, 4b) einschließt, die ausgebildet sind, um in den Stiftkörper (4) mit Bezug auf eine Achse des Stiftkörpers (4) integriert zu werden, indem sie entlang der Achse des Stiftkörpers (4) angeordnet werden, und die Nutkomponente die Spiralnut (16) einschließt, die an jedem Endabschnitt des Stiftkörpers geformt ist.

7. Die Zapfenverbindung gemäß Anspruch 1, **dadurch gekennzeichnet, dass** die Nutkomponente an einem ersten Endabschnitt des Stiftkörpers (4) bereitgestellt ist und der Stiftkörper (4) weiter ein umgekehrtes Kegelende (34) einschließt, das das gegenüberliegende, zweite Ende zur Positionierung in einem zweiten der beiden Glieder einschließt, wobei das umgekehrte Kegelende (34) sich zum ersten Endabschnitt des Stiftkörpers hin verjüngt.

8. Die Zapfenverbindung gemäß Anspruch 3, **dadurch gekennzeichnet, dass** der Drehvorgangs-Abschnitt (8, 14) aus einer Endfläche des ersten Glieds (B) herausragt und das zweite Glied (K) der beiden Glieder zwischen dem Drehvorgangs-Abschnitt (8) und der Endfläche des ersten Glieds (B) gehalten wird.

## Revendications

1. Jonction de tenon, comprenant;
- au moins un premier élément (B) en bois;
- une tige (2) de tenon pour relier ledit premier élément en bois (B) à un deuxième élément (A, K), ladite tige de tenon (2) incluant un corps (4) de tige pour être logée à l'intérieur d'au moins du premier élément (6) des deux éléments et au moins une partie de réception formée sur une surface cylindrique extérieure dudit corps de tige (4) ; et
- au moins une goupille (C) guidée dans ledit premier élément (B) en engagement avec la partie de réception dudit corps de tige (4), ladite partie de réception étant un composant rainure (16, 18, 20) formé sur la surface cylindrique extérieure dudit corps de tige (4) pour s'étendre tout autour dudit corps de tige (4), **caractérisée en ce que** ledit composant rainure est une rainure hélicoïdale (16), et ledit corps de tige (4) inclut en outre une partie rotative de commande (8, 14, 15, 22) permettant audit corps de tige (4) de pivoter autour de son axe.
et dans lequel ladite goupille (C) guidée dans ledit premier élément (B) est ajustée dans ledit composant rainuré (16, 18, 20).

2. Jonction de tenon selon la revendication 1, **caractérisée en ce que** ledit corps de tige (4) a une partie d'extrémité mâle (12) filetée en saillie dudit premier élément.

3. Jonction de tenon selon la revendication 1, **caractérisée en ce que** la rainure hélicoïdale est munie d'une vis (18) formant une partie d'extrémité dudit corps de tige, pour être logée à l'intérieur dudit premier élément.

4. Jonction de tenon selon la revendication 1, **caractérisée en ce que** ladite rainure hélicoïdale (16) est prévue dans chaque partie d'extrémité dudit corps de tige (4), les deux rainures étant en regard relativement à un sens d'hélice.

5. Jonction de tenon selon la revendication 1, **caractérisée en ce que** ledit composant rainuré inclut ladite rainure hélicoïdale (16) formée sur une partie d'extrémité dudit corps de tige (4), et une rainure annulaire (6) formée sur l'autre partie d'extrémité dudit corps de tige (4), et ledit corps de tige (4) inclut en outre une partie de commande rotative permettant audit corps de tige (4) de pivoter autour de son un axe.

6. Jonction de tenon selon la revendication 1, **caractérisée en ce que** ledit corps de tige (4) Inclut une paire de demi-tiges (4a, 4b) aptes à être intégrées dans ledit corps de tige (4) par rapport à un axe dudit corps de tige (4) étant aménagées le long de l'axe dudit corps de tige (4), et ledit composant rainure inclut ladite rainure hélicoïdale (16) formée sur chaque partie d'extrémité dudit corps de tige.

7. Jonction de tenon selon la revendication 1, **caractérisée en ce que** ledit composant rainuré est prévu sur une première partie d'extrémité dudit corps de tige (4), et ledit corps de tige (4) inclut en outre une extrémité conique inversée (34) formant la deuxième extrémité opposée pour être placée à l'intérieur de l'un des deux éléments, l'extrémité conique inversée (34) diminuant vers ladite première partie d'extrémité dudit corps de tige.

8. Jonction de tenon selon la revendication 3, **caractérisée en ce que** la partie rotative de commande (8, 14) fait saillie d'une portée d'extrémité dudit premier élément (B), et le deuxième élément (K) des deux éléments est retenu entre la partie rotative de commande (8) et la portée d'extrémité du premier élément (B).
